# EUROPEAN PATENT APPLICATION

(11) **EP 4 815 107 A1**
(43) Date of publication of application: **30.09.2026**
(21) Application number: 24896250.8
(22) Date of filing: 11.11.2024
(51) Int. Cl.: H01M 10/613, H01M 10/6556, H01M 10/6568, H01M 10/655, H01M 10/617

(54) **COOLING TUBE, BATTERY ASSEMBLY, AND ELECTRICAL APPARATUS**

(30) Priority: 29.11.2023 CN 202323238066 U
(71) Applicant: BYD Company Limited, Shenzhen, Guangdong 518118 (CN)
(72) Inventor: WANG, Biao, Shenzhen, Guangdong 518118 (CN); YIN, Xueqin, Shenzhen, Guangdong 518118 (CN); LI, Shanpeng, Shenzhen, Guangdong 518118 (CN); YIN, Xiaoqiang, Shenzhen, Guangdong 518118 (CN); YANG, Guibo, Shenzhen, Guangdong 518118 (CN)
(74) Representative: Taor, Simon Edward William
(86) International application number: PCT/CN2024/131421
(87) International publication number: WO 2025/113159

(57) **Abstract**

The present application discloses a cooling tube, a battery assembly, and an electrical apparatus, and relates to the technical field of battery cooling. The cooling tube is used to cool the battery assembly. The cooling tube comprises multiple first tubes arranged along a first direction and extending along a second direction, the first direction intersecting with the second direction, a first width of a first tube in the first direction being W1, a second width between every two adjacent first tubes being W2, and the first width W1 and the second width W2 satisfying the expression: W1≥(1/3)*W2. By means of defining the first width W1 of the first tube to be greater than or equal to one third of the second width W2 between adjacent first tubes, it is ensured that a contact area between the first tubes and the battery assembly is sufficiently large, and that the second width W2 between every two adjacent first tubes is identical, so that the cooling tube and the battery assembly are uniformly heated, thereby improving heat dissipation uniformity of the cooling tube and the battery assembly.

## Description

### CROSS-REFERENCE TO RELATED APPLICATIONS

The present disclosure claims priority to Chinese Patent disclosure No. 202323238066.8 filed on November 29, 2023, entitled "Cooling Tube, Battery Assembly, and Electrical Apparatus", which is incorporated by reference in its entirety.

### FIELD

The present disclosure relates to the technical field of battery cooling, and in particular, to a cooling tube, a battery assembly, and an electrical apparatus.

### BACKGROUND

With the continuous increase in energy density requirements for battery packs, a plurality of battery modules are often arranged within a battery pack. Each battery module comprises a plurality of battery cells. During operation, these battery cells generate heat over extended periods, causing the battery pack to operate at elevated temperatures for prolonged durations. This adversely affects the performance and service life of the battery pack and poses safety hazards. Therefore, effective thermal dissipation is required. A commonly used cooling method involves cold plate cooling, where a coolant is circulated within the cold plate to dissipate heat from the battery modules. However, a problem of uneven heat distribution is prone to occur between the cold plate and the battery modules.

### SUMMARY

The present disclosure provides a cooling tube, a battery assembly, and an electrical apparatus, aiming to solve the problems of uneven heat distribution between a cooling tube and battery modules.

In order to achieve the objective of the present disclosure, the present disclosure provides the following technical solutions:
In a first aspect, a cooling tube is configured to cool a battery assembly, the cooling tube includes a plurality of first tubes arranged along a first direction and extending along a second direction, the first direction intersect with the second direction, along the first direction, a first width of the first tube is W1, a second width between every two adjacent first tubes is W2, and the first width W1 and the second width W2 satisfy the expression: W1≥1/3*W2.

In the embodiment, the cooling tube further includes a second tube, at least two adjacent first tubes are connected by the second tube, and an orthographic projection of the second tube on a plane perpendicular to the first direction forms an angle with an orthographic projection of the first tube on a plane perpendicular to the first direction.

In the embodiment, the cooling tube further includes a second tube, at least two adjacent first tubes are connected by the second tube, and an orthographic projection of the second tube on a plane perpendicular to a second direction is a bent structure.

In the embodiment, the second tube is bent relative to the first tube along a third direction to enclose an accommodating space, the third direction, the first direction and the second direction are pairwise intersecting, an opening is formed on a side of the accommodating space facing the first tube in the third direction, and the accommodating space is configured to accommodate at least a portion of a support beam of the battery assembly.

In the embodiment, the second tube is arranged as a plurality of spaced-apart tubes, at least one second tube is arranged on a first side of the cooling tube, and at least one second tube is arranged on a second side of the cooling tube, and the first side and the second side are opposite to each other in the second direction.

In the embodiment, the cooling tube further includes a third tube, the third tube extend along the first direction, two partially adjacent first tubes are connected by the third tube, an orthographic projection of the cooling tube on a plane perpendicular to the third direction is symmetrical about a central axis of the cooling tube in the first direction, and the third direction is perpendicular to the first direction and the second direction.

In a second aspect, a battery assembly includes a first battery module, a second battery module and a cooling tube according to any embodiment of the first aspect; the first battery module, the cooling tube and the second battery module are arranged in sequence.

In the embodiment, a bottom of the second battery module is arranged a support beam extending in the second direction, and the support beam is located between two adjacent first tubes, and the support beam is at least partially accommodated in the accommodating space of the cooling tube.

In the embodiment, an end of the first battery module towards the cooling tube is further arranged a pull plate extending in the second direction, the pull plate is opposite to the third tube of the cooling tube in the second direction, and the pull plate is accommodated between two first tubes connected to the third tube.

In the embodiment, the first battery module further includes an end plate arranged at both ends of the first battery module in the second direction, an end of the pull plate is connected with the end plate, and an orthographic projection of the third tube opposite to the pull plate on a plane perpendicular to the third direction is located outside an orthographic projection of the first battery module on a plane perpendicular to the third direction, and the third direction intersects with the second direction.

In the embodiment, at least a portion of the second tube of the cooling tube abuts against an outer surface of the end plate, and each accommodating spaces of each second tube accommodates at least a portion of one of a plurality of the support beams.

In the embodiment, the battery assembly further includes a first fixing member, at least a portion of the first fixing member is located between two adjacent first tubes, the first fixing member is formed with a first fixing hole, the end plate is formed with a first mating member, and the first fixing hole is matched and connected with the first mating member.

In the embodiment, the battery assembly further includes a thermally conductive pad, the first tube of the cooling tube includes a first surface and a second surface, the first surface and the second surface are oppositely arranged in the third direction, and the first surface and the second surface are both arranged the thermally conductive pad.

In the embodiment, the first tube includes a first end and a second end, the first end and the second end are oppositely arranged in the second direction, the third direction is perpendicular to the second direction, and the first end and/or the second end are arranged a limiting portion, and the thermally conductive pad abuts against the limiting portion.

In the embodiment, along the first direction, the third width of the thermally conductive pad is W3, the third width W3 is greater than or equal to the first width W1 of the first tube, and the first direction, the third direction and the second direction are pairwise perpendicular.

In the embodiment, the first battery module further includes a busbar component, the busbar component is located at two opposite ends of the first battery module in the first direction, the cooling tube includes a third end and a fourth end opposite in the first direction, a gap is arranged between the third end and the busbar component adjacent to the third end, and between the fourth end and the busbar component adjacent to the fourth end.

In the embodiment, along the first direction, a fourth width of the gap is W4, and the fourth width W4 and the first width W1 satisfy the expression: W1 ≤ W4 ≤ 3*W1.

In the embodiment, along the third direction, the first thickness of the cooling tube is H1, the second thickness of the thermally conductive pad is H2, the third thickness of the distance between the first battery module and the second battery module is H3, and the first thickness H1, the second thickness H2 and the third thickness H3 satisfy the expression: H1+2*H2≥H3.

In a third aspect, an electrical apparatus includes the battery assembly according to any embodiment of the second aspect, the battery assembly being configured to supply power to the electrical apparatus.

By stipulating that the first width W1 of the first tube is greater than or equal to one-third of the second width W2 between two adjacent first tubes, a sufficiently large contact area between the first tubes and the battery assembly is ensured. Furthermore, by making the second widths W2 between adjacent first tubes equal, heat distribution between the cooling tube and the battery assembly is made uniform, thereby improving the uniformity of heat dissipation between the cooling tube and the battery assembly.

### BRIEF DESCRIPTION OF THE DRAWINGS

In order to clearly illustrate the technical solutions in the embodiments of the present disclosure, the figures required for use in the description of the embodiments will be briefly described below.
FIG. 1 is a perspective schematic structural view of a battery assembly according to an embodiment of the present disclosure;
FIG. 2 is a perspective schematic structural view of a cooling tube according to an embodiment of the present disclosure;
FIG. 3 is another perspective schematic structural view of a cooling tube according to an embodiment of the present disclosure;
FIG. 4 is a perspective schematic structural view of a first battery module in a battery assembly according to an embodiment of the present disclosure;
FIG. 5 is a perspective schematic structural view of a second battery module in a battery assembly according to an embodiment of the present disclosure;
FIG. 6 is another perspective schematic structural view of a battery assembly according to an embodiment of the present disclosure;
FIG. 7 is a perspective schematic structural view of a battery assembly according to an embodiment of the present disclosure;
FIG. 8 is a perspective schematic structural view of a cooling tube and a thermally conductive pad according to an embodiment of the present disclosure;
FIG. 9 is an enlarged schematic view of area IX in the cooling tube shown in FIG. 3;
FIG. 10 is an enlarged schematic view of area X in the cooling tube shown in FIG. 3;
FIG. 11 is a perspective schematic structural view of a thermally conductive pad in a battery assembly according to an embodiment of the present disclosure;
FIG. 12 is yet another perspective schematic structural view of a cooling tube in a battery assembly according to an embodiment of the present disclosure;
FIG. 13 is another perspective schematic structural view of a first battery module in a battery assembly according to an embodiment of the present disclosure;
FIG. 14 is yet another perspective schematic structural view of a battery assembly according to an embodiment of the present disclosure;
FIG. 15 is a schematic view of an electrical apparatus according to an embodiment of the present disclosure.

Explanation of reference numerals:
A - First direction, B - Second direction, C - Third Direction, W1 - First Width, W2 - Second Width, W3 - Third Width, W4 - Fourth Width, L1 - First Length, L2 - Second Length, L3 - Third Length, H1 - First Thickness, H2 - Second Thickness, H3 - Third Thickness;
10a - First Battery Module, 10b - Second Battery Module, 11 - Support Beam, 12 - Battery Cell Group, 13 - Pull Plate, 15 - End Plate, 151 - First Mating Member, 17 - Busbar Component;
30 - Cooling Tube, 31 - First Tube 311 - First Surface, 313 - Second Surface, 315 - First End, 317 - Second End, 32 - First Side, 33 - Second Tube, 331 - Accommodating Space, 332 - Opening, 34 - Second Side, 35 - Third Tube, 36 - Third End, 37 - Inlet Tube, 38-Fourth End, 39 - Outlet Tube;
40 - Thermal Insulation Cotton;
50 - First Fixing Member, 51 - First Fixing Hole;
60 - Second Fixing Member, 61 - Second Fixing Hole;
70 - Thermally Conductive Pad;
80 - Limiting Portion;
100 - Battery Assembly.

### DETAILED DESCRIPTION

The technical solutions in the embodiments of the present disclosure will be clearly and completely described below in combination with the figures in the embodiments of the present disclosure. Obviously, the described embodiments are only part of the embodiments of the present disclosure, rather than all the embodiments. Based on the embodiments in the present disclosure, all the other embodiments obtained by those skilled in the art without inventive step based on the embodiments of the present disclosure are intended to be within the scope of protection of the present disclosure.

The description of the following embodiments refers to the figures, which are provided to illustrate specific embodiments in which the present disclosure may be practiced. The directional terms mentioned , such as "up", "low", "front", "rear", "left", "right", "inner", "outer", "side", etc., are used with reference to the orientation of the figures. Therefore, the use of these directional terms is intended to facilitate a clearer description and understanding of the present disclosure, and is not intended to indicate or imply that the referred apparatus or elements must have a specific orientation or be constructed and operated in a specific orientation. Thus, they should not be construed as limiting the present disclosure.

Furthermore, the numerical designations assigned to components, such as "first", "second", etc., are used solely to distinguish between the objects described and carry no sequential or technical meaning. As used, the terms "connect" and "couple", unless otherwise specified, encompass both direct and indirect connection (coupling).

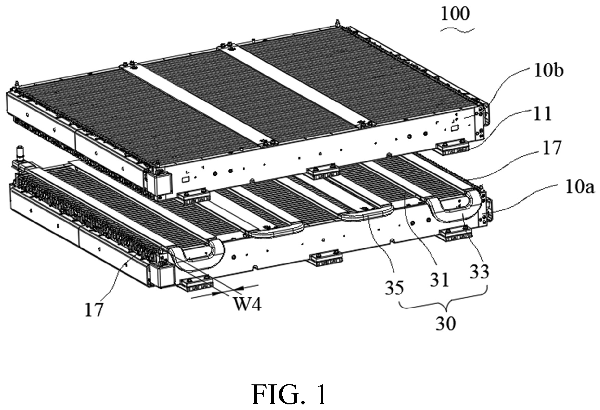

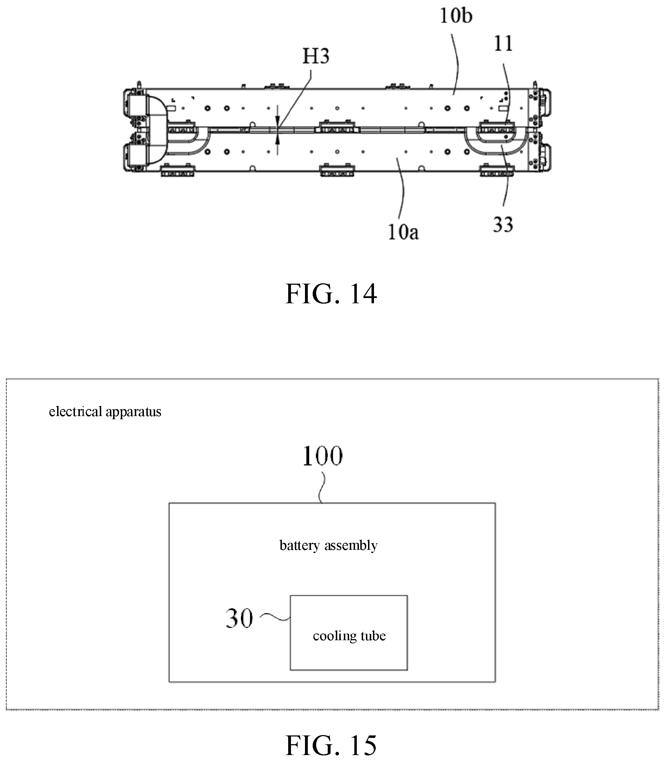

As shown in FIG. 1 and FIG. 15, an embodiment of the present disclosure provides an electrical apparatus. The electrical apparatus comprises a battery assembly 100 according to any embodiment of the present disclosure, and the battery assembly 100 is configured to supply power to the electrical apparatus.

The electrical apparatus may be a vehicle or an energy storage device. The vehicle may be a new energy vehicle, such as a pure electric vehicle/Battery Electric Vehicle (PEV/BEV), a range extended electric vehicle (REEV), a hybrid electric vehicle (HEV), or a fuel cell electric vehicle. Alternatively, the vehicle may be any vehicle equipped with the battery assembly 100. The battery assembly 100 may be a battery pack or an energy storage cabinet.

In an embodiment of the present disclosure, a battery assembly 100 comprises a cooling tube 30, the cooling tube 30 is configured to cool a battery assembly. The battery assembly 100 comprises a first battery module 10a and a second battery module 10b. The first battery module 10a, the cooling tube 30, and the second battery module 10b are arranged in sequence.

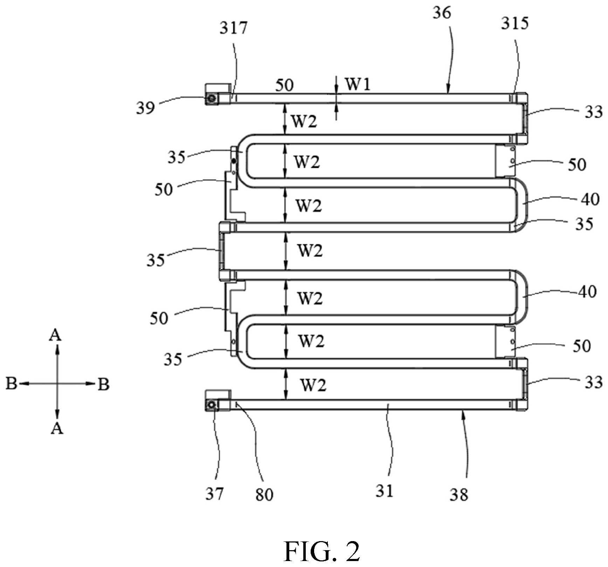

Referring to FIG. 2, the cooling tube 30 includes a plurality of first tubes 31 arranged along a first direction A and extending along a second direction B, the first direction A intersect with the second direction B, along the first direction A, a first width of the first tube 31 is W1, a second width between every two adjacent first tubes 31 is W2, and the first width W1 and the second width W2 satisfy the expression: W1≥1/3*W3.

If the first width W1 of the first tube 31 is less than 1/3 * W3, it will result in insufficient heat transfer between the first tube 31 and the first battery module 10a as well as the second battery module 10b. By stipulating that the first width W1 of a first tube 31 is greater than or equal to one-third of the second width W2 between two adjacent first tubes 31, a sufficiently large contact area between the first tubes 31 and the battery assembly 100 is ensured. Furthermore, by making the second widths W2 between adjacent first tubes 31 equal, heat distribution between the cooling tube 30 and the battery assembly 100 is made uniform, thereby improving the uniformity of heat dissipation between the cooling tube 30 and the battery assembly 100.

The cooling tube 30 is disposed on top of the first battery module 10a. In the arrangement direction of the first battery module 10a and the second battery module 10b, the end of the first battery module 10a facing the second battery module 10b is defined as the top of the first battery module 10a, and the end of the second battery module 10b facing away from the first battery module 10a is defined as the top of the second battery module 10b. The cooling tube 30 has a serpentine structure, and the first direction A is perpendicular to the second direction B.

The second width W2 between two adjacent first tubes 31 is the width of the spacing between them along the first direction A. The second width W2 between two adjacent first tubes 31 may be the same as or different from that between other pairs of adjacent first tubes 31. If different, the difference between them is small, ensuring uniform heat exchange with the first battery module 10a or the second battery module 10b. Preferably, the second widths W2 between adjacent first tubes 31 are the same.

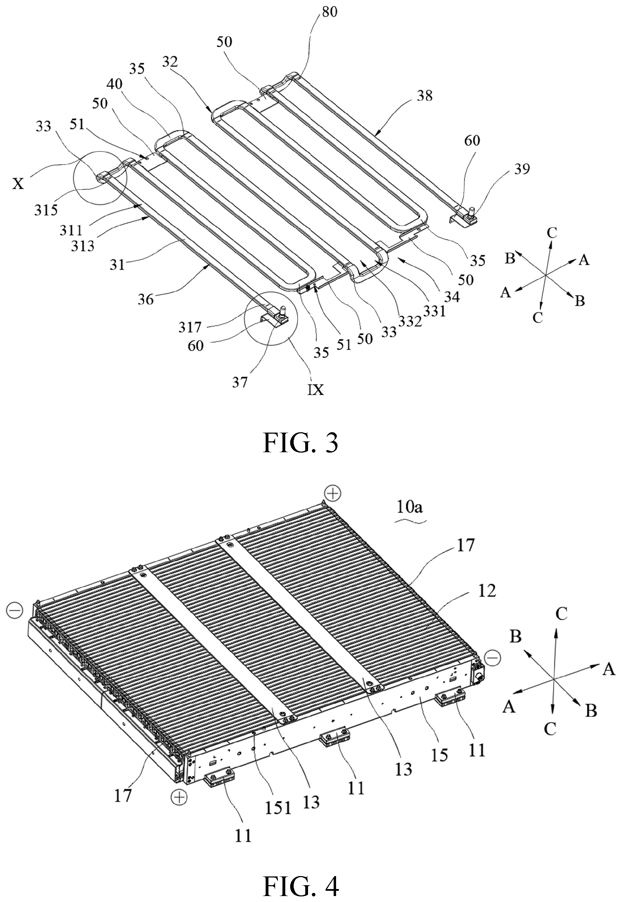

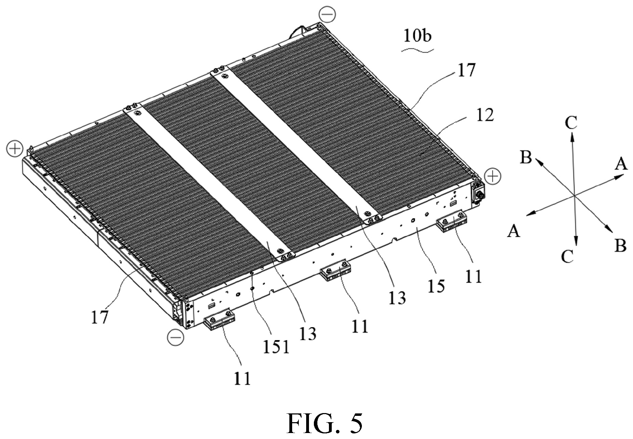

It should be noted that the structures of the first battery module 10a and the second battery module 10b may be identical. Both the first battery module 10a and the second battery module 10b are provided with a battery cell group 12, and both have a support beam 11 for securing the battery cell group 12. The distinction between the first battery module 10a and the second battery module 10b lies in the opposite polarity arrangement of the battery cells within their respective battery cell groups 12, as shown in FIG. 4 and FIG. 5.

As shown in FIG. 3, the cooling tube 30 further comprises a second tube 33, at least two adjacent first tubes 31 are connected by the second tube 33, and an orthographic projection of the second tube 33 on a plane perpendicular to the first direction A forms an angle with an orthographic projection of the first tube 31 on a plane perpendicular to the first direction A. The angle is defined as: an angle between the junction of the orthographic projection of the second tube 33 and the orthographic projection of the first tube 31 on a plane perpendicular to the first direction A.

The angle between the orthographic projection of the second tube 33 and that of the first tube 31 on a plane perpendicular to the first direction A is greater than or equal to 90° and less than 180°. For example, the angle may be 90°, 100°, 130°, 150°, or 160°, and so on, which are not exhaustively listed.

Specifically, the junction between the second tube 33 and the first tube 31 has a curved transition. The orthographic projection of the second tube 33 on a plane perpendicular to the first direction A is an L-shaped structure with a curved transition, thereby enabling the second tube 33 to provide clearance from the end face of the first battery module 10a, while also limiting the overall movement of the cooling tube 30 in the second direction B to prevent its offset in the second direction B.

In an embodiment, the orthographic projection of the second tube 33 on a plane perpendicular to the first direction A may be a C-shaped structure, a Z-shaped structure, or another structure, which is not specifically limited.

In an embodiment, an orthographic projection of the second tube 33 on a plane perpendicular to a second direction B is a bent structure.

In an embodiment,, the orthographic projection of the second tube 33 on a plane perpendicular to the second direction B may be a U-shaped structure. The arrangement of the U-shaped second tube 33 allows the entire cooling tube 30 to engage with the side wall of the first battery module 10a in the second direction B, thereby preventing offset of the cooling tube 30 in the second direction B, which could otherwise adversely affect its cooling performance on the battery assembly 100.

In an embodiment, the orthographic projection of the second tube 33 on a plane perpendicular to the second direction B may also be a W-shaped structure, a C-shaped structure, or another bent structure, without being specifically limited.

In an embodiment,, the second tube 33 is bent relative to the first tube 31 along a third direction C to enclose an accommodating space 331. The third direction C, the first direction A, and the second direction B are pairwise intersecting. An opening 332 is formed on a side of the accommodating space 331 facing the first tube 31 in the third direction C. The accommodating space 331 is configured to accommodate at least a portion of a support beam 11 of the battery assembly 100.

The first direction A, the second direction B, and the third direction C may be mutually perpendicular. The opening 332 is in communication with the accommodating space 331.

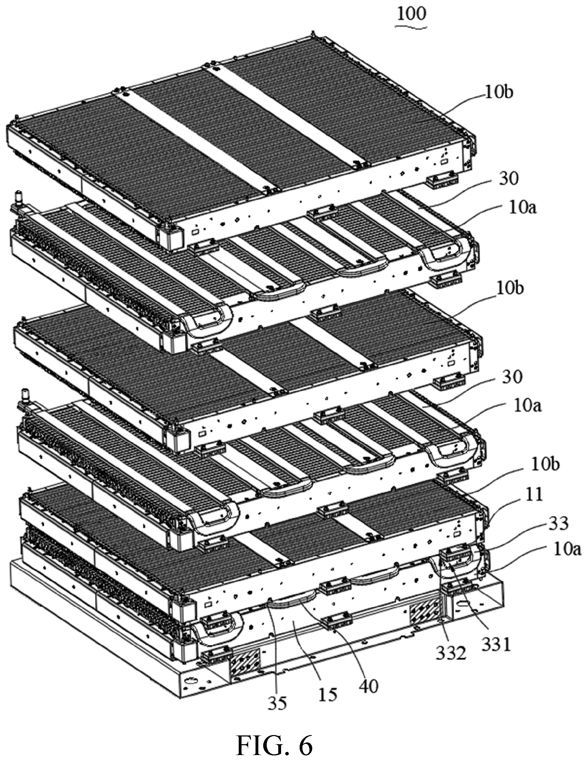

As shown in FIG. 6, the second battery module 10b is stacked on the cooling tube 30. The support beam 11 extending along the second direction B is arranged a bottom of the second battery module 10b. The support beam 11 is located between two adjacent first tubes 31, and at least a portion of the support beam 11 is accommodated in the accommodating space 331. W, the opening 332 of the accommodating space 331 faces the second battery module 10b in the third direction C.

The support beam 11 of the second battery module 10b is located between the two first tubes 31 connected to a second tube 33. A portion of the support beam 11 that protrudes beyond the battery cell group 12 in the second battery module 10b extends into the accommodating space 331 through the opening 332. The arrangement of the second tube 33 provides clearance for the support beam 11. This ensures that the support beam 11 can secure the battery cell group 12 in the second battery module 10b while simultaneously reducing the space occupied by the cooling tube 30 within the battery assembly 100, resulting in a compact internal structure of the battery assembly 100.

In an embodiment, with the first battery module 10a, the cooling tube 30, and the second battery module 10b assembled, a U-shaped second tube 33 may be located on one side surface of the first battery module 10a along the second direction B. Alternatively, the U-shaped second tube 33 may be located on one side surface of the second battery module 10b along the second direction B.

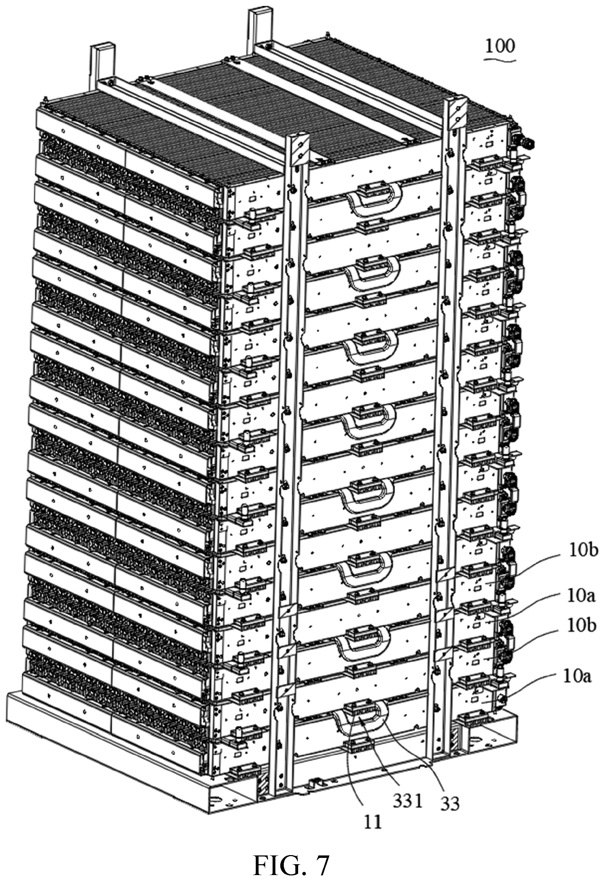

Referring to FIG. 7, the battery assembly 100 may comprise a plurality of first battery modules 10a and a plurality of second battery modules 10b. The number of first battery modules 10a is equal to the number of second battery modules 10b. When stacking the battery assembly 100, the cooling tube 30 may first be installed on a first battery module 10a, and then a second battery module 10b may be stacked on the first battery module 10a with the cooling tube 30 installed thereon. The cooling tube 30 conforms to the top of the first battery module 10a and to the bottom of the second battery module 10b. Subsequently, stacking continues with another first battery module 10a equipped with a cooling tube 30, followed by another second battery module 10b. A plurality of layers of battery modules are formed by repeating this sequence. For example, 16 layers of battery modules may be stacked, comprising 8 layers of first battery modules 10a and 8 layers of second battery modules 10b, with 8 cooling tubes 30 provided to dissipate heat for the 16-layer battery modules. After the battery modules are stacked, the uprights and related electrical structural components of the battery assembly 100 are connected. Finally, the liquid cooling device of the battery assembly 100 is connected to a inlet tube 37 and a outlet tube 39 of the cooling tube 30.

As shown in FIG. 3, the second tube 33 is arranged as a plurality of spaced-apart tubes and the support beam 11 is also arranged as a plurality thereof. The accommodating space 331 of each second tube 33 accommodates at least a portion of one support beam 11. At least one second tube 33 is arranged on a first side 32 of the cooling tube 30, and at least one second tube 33 is arranged on a second side 34 of the cooling tube 30, the first side 32 and the second side 34 being opposite to each other in the second direction B.

Referring to FIG. 7, the number of second tubes 33 may be equal to the number of support beams 11. W, the plurality of support beams 11 are spaced apart along the first direction A at the bottom of the second battery module 10b (or the first battery module 10a). The end of the first battery module 10a facing away from the second battery module 10b is defined as its bottom. Thus, when the cooling tube 30 is placed between two stacked battery modules, the plurality of spaced support beams 11 can be located between adjacent first tubes 31. The spaced arrangement of the plurality of support beams 11 further enhances the securing effect on the battery cell groups 12. Moreover, the plurality of second tubes 33 simultaneously engage with opposite ends of the first battery module 10a in the second direction B, ensuring that the cooling tube 30 is stably installed on the first battery module 10a and preventing offset of the cooling tube 30 in the second direction B, which would otherwise reduce the heat exchange area between the cooling tube 30 and the battery modules.

As shown in FIG. 3, the cooling tube 30 further comprises a third tube 35 extending along the first direction A. Two partially adjacent first tubes 31 are connected by the third tube 35. An orthographic projection of the cooling tube 30 on a plane perpendicular to the third direction C is symmetrical about a central axis of the cooling tube 30 in the first direction A. The third direction C is perpendicular to the first direction A and the second direction B.

The cooling tube 30 comprises the first tube 31, the second tube 33, and the third tube 35, wherein two partially adjacent first tubes 31 are connected by a second tube 33, while another portion of adjacent two first tubes 31 are connected by a third tube 35, thereby forming a serpentine cooling tube structure.

The cooling tube 30 further comprises the inlet tube 37 and the outlet tube 39. The inlet tube 37 and the outlet tube 39 are located on first tube 31 at opposite sides of the cooling tube 30 in the first direction A. In the second direction B, the inlet tube 37 and the outlet tube 39 are located on the same side of the cooling tube 30. The cooling tube 30 equipped with the inlet tube 37 and the outlet tube 39 maintains symmetry in its orthographic projection on a plane perpendicular to the third direction C about a central axis of the cooling tube 30 in the first direction A.

It is to be understood that flow channels are formed within the first tube 31, the second tube 33, the third tube 35, the inlet tube 37, and the outlet tube 39, to ensure a coolant can be supplied to the cooling tube 30 to dissipate heat from the first battery module 10a and the second battery module 10b by the coolant.

Referring to FIG. 3 and FIG. 4, a pull plate 13 extending along the second direction B is further arranged on top of the first battery module 10a. The pull plate 13 is opposite to a third tube 35 in the second direction B and is accommodated between the two first tubes 31 connected to that third tube 35.

The pull plate 13 serves to secure the battery cell group 12 within the first battery module 10a. The pull plate 13 and the support beam 11 in the first battery module 10a are configured to limit the movement of the battery cell group 12 in the third direction C, ensuring that the top surface of the battery cell group 12 is flat. Therefore, allows for more complete conformity between the battery cell group 12 and the cooling tube 30, guaranteeing the heat dissipation efficiency of the battery assembly 100.

The third tube 35 may be arranged in plurality, and the pull plate 13 is also arranged in plurality. The number of pull plates 13 may be equal to or less than the number of the third tubes 35. For example, four third tubes 35 and four pull plates 13 may be provided, wherein each third tube 35 corresponds to one pull plate 13 along the second direction B. Alternatively, four third tubes 35 and two pull plates 13 may be provided, wherein two of the third tubes 35 are arranged opposite to the pull plates 13 in the second direction B.

The first battery module 10a further comprises end plate 15 arranged at both ends in the second direction B. An end of the pull plate 13 is connected with the end plate 15. An orthographic projection of a third tube 35 opposite to the pull plate 13 on a plane perpendicular to the third direction C is located outside an orthographic projection of the first battery module 10a on a plane perpendicular to the third direction C.

The battery cells in the first battery module 10a are arranged to form the battery cell group 12. The end plates 15 are arranged at opposite ends of the battery cell group 12 in the second direction B for securing the battery cell group 12. The orthographic projection of the third tube 35 opposite to the pull plate 13 is located outside the orthographic projection of the battery cell group 12 on a plane perpendicular to the third direction C. Thus, when the cooling tube 30 is installed on top of the first battery module 10a, the third tube 35 located at the edge of the battery cell group 12 can provide clearance for the pull plate 13. While securing the battery cell group 12, ensuring a sufficient heat exchange area between the cooling tube 30 and the battery cell group 12.

Referring to FIG. 6, at least a portion of a second tube 33 abuts against an outer surface of an end plate 15. A portion of the support beam 11 connected to the end plate 15 may be received within the accommodating space 331 of the second tube 33. The cooling tube 30 can directly conform to the battery cell group 12, improving heat exchange efficiency.

In an embodiment, the battery assembly 100 may further comprise thermal insulation cotton 40. The thermal insulation cotton 40 is disposed at a third tube 35 that provides clearance for a pull plate 13, i.e., at a portion of the third tube 35 extending beyond the first battery module 10a. Thus, it prevents condensation from forming on the third tube 35 located outside the first battery module 10a and contacting other electrical components in the battery assembly 100, which could cause a short circuit, thereby providing electrical protection for the battery assembly 100.

In the present disclosure, at least one second tube 33 is arranged on each of the first side 32 and the second side 34 of the cooling tube 30, and the second tubes 33 abut against the outer surfaces of the end plate 15. The second tubes 33 on the first side 32 and the second side 34 serve to secure the cooling tube 30, preventing its offset in the second direction B, which would adversely affect the cooling performance on the first battery module 10a and the second battery module 10b.

Referring to FIG. 3 and FIG. 4, the battery assembly 100 may further comprise a first fixing member 50. At least a portion of the first fixing member 50 is located between two adjacent first tubes 31. The first fixing member 50 is formed with a first fixing hole 51. The end plate 15 is formed with a first mating member 151. The first fixing hole 51 is matched and connected with the first mating member 151.

In an embodiment, the first fixing member 50 may be provided in plurality. At least a portion of one first fixing member 50 may be arranged between every two adjacent first tubes 31, or between some adjacent two first tubes 31. The connection between a first fixing member 50 and a first tube 31 may be achieved by welding.

The serpentine cooling tube 30 may be formed by bending and stamping aluminum alloy. By arranging the first fixing member 50 between adjacent first tubes 31, the spacing between adjacent first tubes 31 in the first direction A is maintained as consistently as possible, reducing or avoiding the possibility that the direction of some first tubes 31 deviates from the second direction B when the second battery module 10b is stacked and displaced.

For example, the entire first fixing member 50 may be located between two adjacent first tubes 31, with its two ends in the first direction A abutting against the two adjacent first tubes 31 respectively, as shown by the first fixing member 50 on the first side 32 of the cooling tube 30 in FIG. 2. In another example, a portion of the first fixing member 50 may be located between two adjacent first tubes 31, with one end of that portion abutting against one of the first tubes 31, and another portion of the first fixing member 50 abutting against a side surface of a third tube 35 in the second direction B, as shown by the first fixing member 50 on the second side 34 of the cooling tube 30 in FIG. 2.

The first mating member 151 on the end plate 15 may be a positioning post inserted into the first fixing hole 51 to secure the first fixing member 50 to the end plate 15. Alternatively, the first mating member 151 may be a positioning hole coaxial with the first fixing hole 51 in the third direction C, and the first fixing member 50 and the end plate 15 may be fixedly connected by a bolt sequentially passing through the first fixing hole 51 and the positioning hole. Alternatively, the first fixing member 50 may be arranged with two first fixing holes 51, and the end plate 15 may be arranged with one positioning post and one positioning hole (or two positioning holes, or two positioning posts). The first fixing member 50 and the end plate 15 are fixedly connected simultaneously through the cooperation of the positioning post with a first fixing hole 51 and the fastening of a positioning hole and another first fixing hole 51 by a bolt. When assembling the battery assembly 100, the cooling tube 30 can be accurately installed at a designated position on top of the first battery module 10a, effectively improving assembly efficiency. Furthermore, securing the cooling tube 30 to the end plate 15 by the first fixing member 50 prevents movement of the cooling tube 30 when the second battery module 10b is stacked thereon, thereby avoiding assembly issues for the battery assembly 100.

When the first fixing members 50 are installed on both the first side 32 and the second side 34 of the cooling tube 30, the first fixing holes 51 on the first fixing members 50 on both sides are collinear along symmetry axes parallel to the second direction B. When the first fixing members 50 are fixedly connected to the end plates 15, it avoids discrepancies between the spacing of the two first tubes 31 at the first side 32 and the spacing at the second side 34, ensuring uniformity in the spacing between the two first tubes 31 connected to a first fixing member 50.

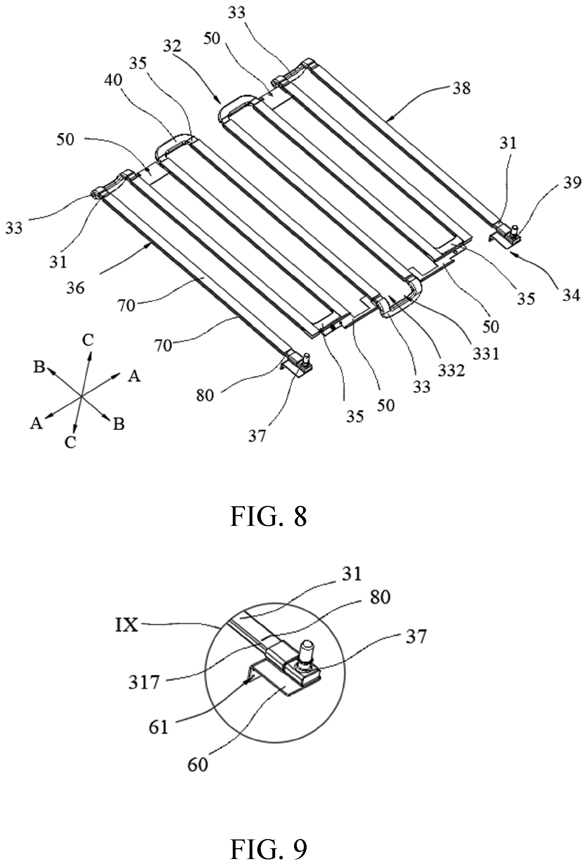

Referring to FIG. 9, the battery assembly 100 may further comprise a second fixing member 60. The second fixing member 60 is arranged at the inlet tube 37 and the outlet tube 39. The second fixing member 60 may be fixedly connected to the inlet tube 37 and the outlet tube 39 by welding, respectively. The second fixing member 60 may be formed with a second fixing hole 61. The end plate 15 is arranged a second mating member, which may be a through hole. The second fixing member 60 and the end plate 15 may be fixedly connected by a bolt passing through the second fixing hole 61 and the through hole. When installing the cooling tube 30, it can be positioned on the end plate 15 by the second fixing member 60 to prevent movement the cooling tube 30 that could affect the stacking of the second battery module 10b. Additionally, the second fixing member 60 can support the inlet tube 37 and the outlet tube 39, preventing deformation of the inlet tube 37 and the outlet tube 39 during the plugging/unplugging of the liquid cooling device.

Referring to FIG. 3 and FIG. 8, the battery assembly 100 may further comprise a thermally conductive pad 70. A first tube 31 comprises a first surface 311 and a second surface 313, which are opposite arranged in the third direction C. The first surface (311) and the second surface (313) are both arranged the thermally conductive pad (70). The first battery module 10a, the cooling tube 30, and the second battery module 10b are stacked in the third direction C. With the thermally conductive pad 70 arranged on both the first surface 311 and the second surface 313, the cooling tube 30 exchanges heat with the first battery module 10a and the second battery module 10b through the thermally conductive pad 70, ensuring sufficient battery heat dissipation.

The thermally conductive pad 70 itself has a certain adhesiveness and can be directly attached to the cooling tube 30. The thermal conductivity coefficient of the thermally conductive pad 70 is greater than or equal to 2w/m • k, providing higher efficiency for simultaneously dissipating heat from the first battery module 10a and the second battery module 10b. The thermally conductive pad 70 offers advantages such as easy installation, high thermal conductivity efficiency, and low cost.

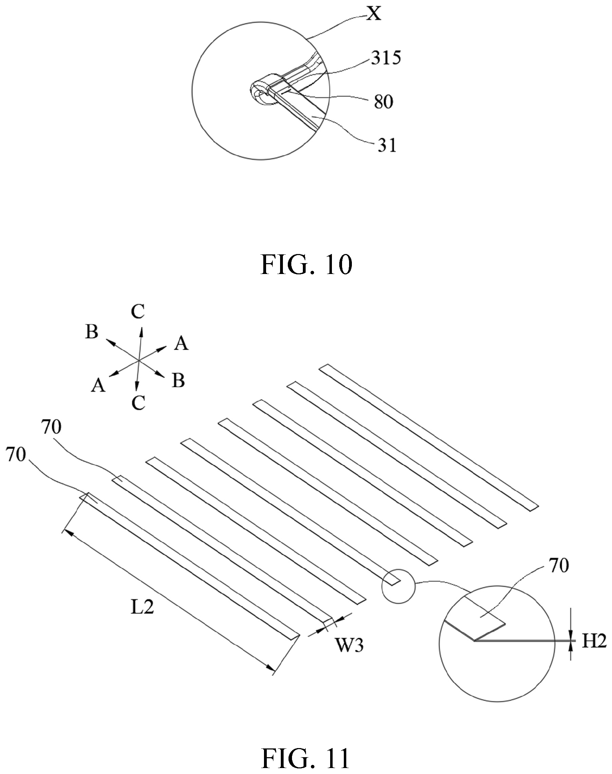

Referring to FIG. 10, a first tube 31 comprises a first end 315 and a second end 317, which are oppositely arranged in the second direction B. The first end 315 and/or the second end 317 are arranged a limiting portion 80, and the thermally conductive pad 70 abuts against the limiting portion 80.

For example, the limiting portion 80 is arranged on all first ends 315; or on all second ends 317; or on both the first end 315 and the second end 317 of every first tube 31; or on the first end 315 of every first tube 31 and on the second end 317 of some first tubes 31, which are not exhaustively listed.

In the present disclosure, the third tube 35 is connected to the second end 317, and the orthographic projection of the third tube 35 connected to this second end 317 on a plane perpendicular to the third direction C is located within the orthographic projection of the battery cell group 12 on a plane perpendicular to the third direction C. No limiting portion 80 is arranged on the second end 317 of the first tube 31 connected to the third tube 35. The limiting portion 80 facilitates the installation and positioning of the thermally conductive pad 70, improving assembly efficiency.

Referring to FIG. 2 and FIG. 11, a third width of the thermally conductive pad 70 is W3, and the third width W3 is greater than or equal to the first width W1. The third width W3 of the thermally conductive pad 70 is greater than or equal to the first width W1 of the first tube 31, enabling the thermally conductive pad 70 to completely cover the surface of the first tube 31. This guarantees a sufficiently large contact area for heat exchange between the thermal conductive pad 70 and the first battery module 10a as well as the second battery module 10b, thereby enabling more effective heat dissipation.

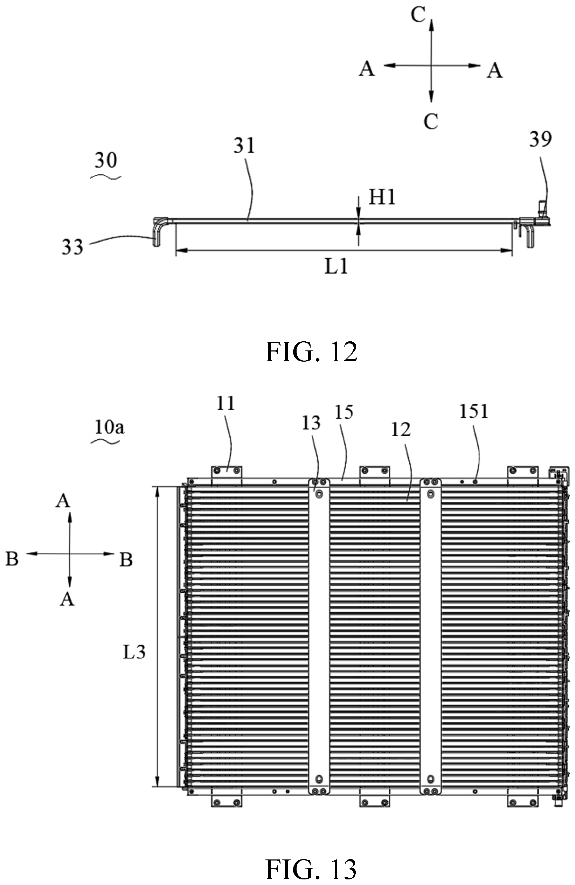

Referring to FIG. 11, FIG. 12, and FIG. 13, along the first direction A, a first length of the cooling tube 30 is L1, which is the effective length of contact between the cooling tube 30 and the first battery module 10a and the second battery module 10b. A second length of the thermally conductive pad 70 is L2. A third length of the battery cell group 12 is L3. Preferably, the first length L1, the second length L2, and the third length L3 are identical.

Referring to FIG. 1, the first battery module 10a further comprises a busbar component 17. The busbar component 17 is located at two opposite ends of the first battery module 10a in the first direction A. The cooling tube 30 comprises a third end 36 and a fourth end 38 opposite in the first direction A. A gap is arranged between the third end 36 and the busbar component 17 adjacent to the third end 36, as well as between the fourth end 38 and the busbar assembly 17 adjacent the fourth end 38.

Along the first direction A, a fourth width of the gap is W4. The fourth width W4 and the first width W1 satisfy the expression: W1≤W4≤3*W1.

The busbar component 17 generates significant heat. The third end 36 and the fourth end 38 of the cooling tube 30 are positioned close to the busbar component. A gap is arranged between the third end 36 and the adjacent busbar component 17, as well as between the fourth end 38 and the adjacent busbar component 17. By setting the fourth width W4 of the gap to be greater than or equal to W1 and less than three times W1, direct abutment between the cooling tube 30 and the busbar component 17 is prevented. This ensures a certain distance between the third end 36 and its adjacent busbar component 17, and between the fourth end 38 and its adjacent busbar component 17, enhancing the safety of the battery module while ensuring the cooling tube 30 can dissipate heat from the busbar component areas, effectively reducing temperatures near the busbar component.

Referring to FIG. 11, FIG. 12, and FIG. 14, along the third direction C, a first thickness of the cooling tube 30 is H1, a second thickness of the thermally conductive pad 70 is H2, and a third thickness of the distance between the first battery module 10a and the second battery module 10b is H3. The first thickness H1, the second thickness H2, and the third thickness H3 satisfy the expression: H1+2*H2≥H3.

The second thickness H2 of the thermally conductive pad 70 may be its thickness after compression. Since thermally conductive pads 70 are arranged on both the first surface 311 and the second surface 313 of the first tube 31, setting the sum of the first thickness of the cooling tube 30 and the second thicknesses of the two thermally conductive pads 70 to be greater than or equal to the third thickness H3 ensures that the thermally conductive pads 70 maintain a certain thickness even when compressed by the first battery module 10a and the second battery module 10b, guaranteeing the heat exchange effect between the thermally conductive pads 70 and the first battery module 10a and the second battery module 10b.

The above describes part of the embodiments of the present disclosure. It should be noted that for those skilled in the art, various modifications and refinements may be made without departing from the principles of the present disclosure, and such modifications and refinements are also considered to fall within the protection scope of the present disclosure.

## Claims

1. A cooling tube (30), comprising: the cooling tube (30) being configured to cool a battery assembly (100), the cooling tube (30) comprising a plurality of first tubes (31) arranged along a first direction and extending along a second direction, the first direction intersecting with the second direction, along the first direction, a first width of the first tube (31) being W1, a second width between every two adjacent first tubes (31) being W2, and the first width W1 and the second width W2 satisfying the expression: W1≥1/3*W2.

2. The cooling tube according to claim 1, wherein the cooling tube (30) further comprises a second tube (33), at least two adjacent first tubes (31) are connected by the second tube (33), and an orthographic projection of the second tube (33) on a plane perpendicular to the first direction forms an angle with an orthographic projection of the first tube (31) on a plane perpendicular to the first direction.

3. The cooling tube according to claim 1 or 2, wherein the cooling tube (30) further comprises a second tube (33), at least two adjacent first tubes (31) are connected by the second tube (33), and an orthographic projection of the second tube (33) on a plane perpendicular to a second direction is a bent structure.

4. The cooling tube according to claim 3, wherein the second tube (33) is bent relative to the first tube (31) along a third direction to enclose an accommodating space (331), the third direction, the first direction and the second direction are pairwise intersecting, an opening (332) is formed on a side of the accommodating space (331) facing the first tube (31) in the third direction, and the accommodating space (331) is configured to accommodate at least a portion of a support beam (11) of the battery assembly (100).

5. The cooling tube according to claim 3, wherein the second tube (33) is arranged as a plurality of spaced-apart tubes, at least one second tube (33) is arranged on a first side (32) of the cooling tube (30), and at least one second tube (33) is arranged on a second side (34) of the cooling tube (30), and the first side (32) and the second side (34) are opposite to each other in the second direction.

6. The cooling tube according to any one of claims 1 to 6, wherein the cooling tube (30) further comprises a third tube (35), the third tube (35) extending along the first direction, two partially adjacent first tubes (31) are connected by the third tube (35), an orthographic projection of the cooling tube (30) on a plane perpendicular to the third direction is symmetrical about a central axis of the cooling tube (30) in the first direction, and the third direction is perpendicular to the first direction and the second direction.

7. A battery assembly (100), comprising a first battery module (10a), comprising a second battery module (10b) and a cooling tube (30) according to any one of claims 1 to 5; the first battery module (10a), the cooling tube (30) and the second battery module (10b) being arranged in sequence.

8. The battery assembly according to claim 7, wherein a bottom of the second battery module (10b) is arranged a support beam (11) extending in the second direction, and the support beam (11) is located between two adjacent first tubes (31), and the support beam (11) is at least partially accommodated in the accommodating space (331) of the cooling tube (30).

9. The battery assembly according to claim 7 or 8, wherein an end of the first battery module (10a) towards the cooling tube (30) is further arranged a pull plate (13) extending in the second direction, the pull plate (13) is opposite to the third tube (35) of the cooling tube (30) in the second direction, and the pull plate (13) is accommodated between two first tubes (31) connected to the third tube (35).

10. The battery assembly according to claim 9, wherein the first battery module (10a) further comprises an end plate (15) arranged at both ends of the first battery module (10a) in the second direction, an end of the pull plate (13) is connected with the end plate (15), and an orthographic projection of the third tube (35) opposite to the pull plate (13) on a plane perpendicular to the third direction is located outside an orthographic projection of the first battery module (10a) on a plane perpendicular to the third direction, and the third direction intersects with the second direction.

11. The battery assembly according to claim 10, wherein at least a portion of the second tube (33) of the cooling tube (30) abuts against an outer surface of the end plate (15), and each accommodating spaces (331) of each second tube (33) accommodates at least a portion of one of a plurality of the support beams (11).

12. The battery assembly according to claim 10 or 11, wherein the battery assembly (100) further comprises a first fixing member (50), at least a portion of the first fixing member (50) is located between two adjacent first tubes (31), the first fixing member (50) is formed with a first fixing hole (51), the end plate (15) is formed with a first mating member (151), and the first fixing hole (51) is matched and connected with the first mating member (151).

13. The battery assembly according to any one of claims 7 to 12, wherein the battery assembly (100) further comprises a thermally conductive pad (70), the first tube (31) of the cooling tube (30) comprises a first surface (311) and a second surface (313), the first surface (311) and the second surface (313) are oppositely arranged in the third direction, and the first surface (311) and the second surface (313) are both arranged the thermally conductive pad (70).

14. The battery assembly according to claim 13, wherein the first tube (31) comprises a first end (315) and a second end (317), the first end (315) and the second end (317) are oppositely arranged in the second direction, the third direction is perpendicular to the second direction, and the first end (315) and/or the second end (317) are arranged a limiting portion (80), and the thermally conductive pad (70) abuts against the limiting portion (80).

15. The battery assembly according to claim 14, wherein along the first direction, the third width of the thermally conductive pad (70) is W3, the third width W3 is greater than or equal to the first width W1 of the first tube (31), and the first direction, the third direction and the second direction are pairwise perpendicular.

16. The battery assembly according to claim 15, wherein the first battery module (10a) further comprises a busbar component (17), the busbar component (17) is located at two opposite ends of the first battery module (10a) in the first direction, the cooling tube (30) comprises a third end (36) and a fourth end (38) opposite in the first direction, a gap is arranged between the third end (36) and the busbar component (17) adjacent to the third end (36), and between the fourth end (38) and the busbar component (17) adjacent to the fourth end (38).

17. The battery assembly according to claim 16, wherein along the first direction, a fourth width of the gap is W4, and the fourth width W4 and the first width W1 satisfy the expression: $W 1 \leq W 4 \leq 3 * W 1 .$

18. The battery assembly according to any one of claims 13 to 16, wherein along the third direction, a first thickness of the cooling tube (30) is H1, a second thickness of the thermally conductive pad (70) is H2, a third thickness of the distance between the first battery module (10a) and the second battery module (10b) is H3, and the first thickness H1, the second thickness H2 and the third thickness H3 satisfy the expression: H1+2*H2≥H3.

19. An electrical apparatus, comprising the battery assembly (100) according to any one of claims 7 to 18, the battery assembly (100) being configured to supply power to the electrical apparatus.
